# EUROPÄISCHE PATENTANMELDUNG

(11) **EP 2 765 360 A2**
(43) Veröffentlichungstag der Anmeldung: **13.08.2014**
(21) Anmeldenummer: 14153294.5
(22) Anmeldetag: 30.01.2014
(51) Int. Cl.: F24D 3/18, F25B 25/00

(54) **Wärmepumpenvorrichtung, Verwendung einer Pumpe mit beheizbarer Pumpenkammer in einer Wärmepumpenvorrichtung und Verfahren zum Betrieb einer Wärmepumpenvorrichtung**

(30) Priorität: 06.02.2013 DE 102013201903
(71) Anmelder: E.G.O. Elektro-Gerätebau GmbH, 75038 Oberderdingen (DE)
(72) Erfinder: Albert, Tobias, 76703 Kraichtal (DE); Roth, Stefanie, 76707 Hambrücken (DE); Kögel, Uwe, 75057 Kürnbach (DE)
(74) Vertreter: Patentanwälte Ruff, Wilhelm, Beier, Dauster & Partner

(57) **Zusammenfassung**

Eine Wärmepumpenvorrichtung für Heizzwecke weist einen Kollektorkreislauf für eine Wärmequelle mit einer Kollektorpumpe für eine Kollektorflüssigkeit, einen Kältemittelkreislauf mit Verdampfer und Verflüssiger für ein Kältemittel in dem Kältemittelkreislauf sowie mit Kompressor und Entspannungsventil, und einen Heizungskreislauf mit einer Heizungspumpe für eine Heizungsflüssigkeit mit Beheizungsmitteln für den Heizzweck auf. Mindestens die Kollektorpumpe und/oder die Heizungspumpe ist als Pumpe mit beheizbarer Pumpenkammer zur Erhitzung der von der Pumpe geförderten Flüssigkeit ausgebildet.

## Beschreibung

Die Erfindung betrifft eine Wärmepumpenvorrichtung für Heizzwecke, insbesondere zur Beheizung von Gebäuden und/oder Wohnräumen, eine Verwendung einer Pumpe mit beheizbarer Pumpenkammer in einer Wärmepumpenvorrichtung sowie ein Verfahren zum Betrieb einer Wärmepumpenvorrichtung für Heizzwecke mit einer vorgenannten Pumpe.

Wärmepumpenvorrichtungen sind allgemein bereits seit längerem bekannt, siehe beispielsweise die DE 202009008908 U1 oder die DE 102010035327 A1. Eine solche Wärmepumpenvorrichtung kann einen Kollektorkreislauf, einen Kältemittelkreislauf und einen Heizungskreislauf aufweisen. Im Kollektorkreislauf kann eine Kollektorpumpe und im Heizungskreislauf eine Heizungspumpe vorgesehen sein. Diese Pumpen dienen dazu, in den jeweiligen Kreisläufen eine die Wärme aufnehmende und transportierende bzw. auch abgebende Flüssigkeit zu pumpen bzw. umzuwälzen, um letztlich Wärme von einer Wärmequelle wie Erde, Wasser oder Luft in den Heizungskreislauf zu bringen bzw. für Heizzwecke verfügbar zu machen. Die Basis für diesen Vorgang, der Umwelt Wärme zu entziehen und auf ein höheres Niveau zu heben, um sie dann für Heizzwecke verwenden zu können, ist der Joule-Thomson-Effekt. Eine Wärmepumpenvorrichtung benötigt zwar elektrische Energie, vor allem für die Pumpen sowie für einen Kompressor im Kältemittelkreislauf. Die gesamte Energieausbeute für Heizzwecke ist jedoch deutlich größer, so dass gerade unter dem Aspekt des Erhöhens des Anteils von Energie aus erneuerbaren Energien sowie einer Reduktion des gesamten Energieverbrauchs ein weiter steigender Bedarf an solchen Wärmepumpenvorrichtungen besteht.

Des Weiteren ist aus der DE 102008050895 A1 eine Pumpe bekannt, bei der eine Beheizung in die Pumpe integriert ist. Dies ermöglicht eine effizientere Verwendung in Haushaltgeräten wie Geschirrspülmaschinen oder Waschmaschinen.

### Aufgabe und Lösung

Der Erfindung liegt die Aufgabe zugrunde, eine eingangs genannte Wärmepumpenvorrichtung, eine Verwendung sowie ein entsprechendes Verfahren zu schaffen, mit denen Probleme des Standes der Technik vermieden werden können und es insbesondere möglich ist energieeffizienter und/oder flexibler eine Wärmepumpenvorrichtung für Heizzwecke einzusetzen.

Gelöst wird diese Aufgabe durch eine Wärmepumpenvorrichtung mit den Merkmalen des Anspruchs 1, eine Verwendung mit den Merkmalen des Anspruchs 8 sowie ein Verfahren mit den Merkmalen des Anspruchs 9. Vorteilhafte sowie bevorzugte Ausgestaltungen der Erfindung sind Gegenstand der weiteren Ansprüche und werden im Folgenden näher erläutert. Dabei werden manche der Merkmale nur für die Wärmepumpenvorrichtung, nur für die Verwendung oder nur für das Verfahren genannt. Sie sollen jedoch unabhängig davon sowohl für die Wärmepumpenvorrichtung als auch für die Verwendung sowie für das Verfahren gelten können. Der Wortlaut der Ansprüche wird durch ausdrückliche Bezugnahme zum Inhalt der Beschreibung gemacht.

Es ist vorgesehen, dass die Wärmepumpenvorrichtung einen Kollektorkreislauf aufweist, in dem eine Kollektorflüssigkeit umgewälzt wird bzw. zirkuliert. Als Wärmequelle kann, wie vorgenannt Erde, Wasser oder Luft dienen. Des Weiteren ist ein Kältemittelkreislauf vorgesehen mit einem Kältemittel sowie einem Verdampfer und einem Verflüssiger dafür und einem Kompressor und einem Entspannungsventil darin. Schließlich ist noch ein Heizungskreislauf vorgesehen mit einer Heizungsflüssigkeit darin sowie mit Beheizungsmitteln, welche üblicherweise Heizkörper und/oder Fußbodenbeheizungen sind, durch die die heiße Heizungsflüssigkeit strömt. Auch hier ist eine Heizungspumpe zum Umwälzen der Heizungsflüssigkeit vorgesehen.

Auf bekannte Art und Weise wirkt der Kollektorkreislauf mit dem Verdampfer des Kältemittelkreislaufs zusammen, so dass Wärme von der Kollektorflüssigkeit an das Kältemittel abgegeben wird, wobei vorzugsweise die Kollektorflüssigkeit in etwa die Temperatur der Wärmequelle aufweist, wobei sie von dem Kompressor verdichtet wird. Der Verflüssiger des Kältemittelkreislaufs wirkt mit dem Heizungskreislauf zusammen, um Wärme vom Kältemittel an die Heizungsflüssigkeit abzugeben. Nach der Wärmeabgabe vom Kältemittel an die Heizungsflüssigkeit wird es mittels des Entspannungsventils wieder entspannt und verdampft wieder im Verdampfer.

Erfindungsgemäß ist vorgesehen, dass mindestens eine der Pumpen im Kollektorkreislauf oder im Heizungskreislauf, also die Kollektorpumpe und/oder die Heizungspumpe, als Pumpe mit einer beheizbaren Pumpenkammer ausgebildet ist, um so die von der Pumpe geförderte Flüssigkeit zu erhitzen. Dabei ist diese Pumpenkammer derjenige Bereich der Pumpe, in dem sich ein Rotor, Pumpenrad bzw. Impeller der Pumpe dreht zur Förderung der Flüssigkeit. Die beheizbare Pumpenkammer kann ein Heizmittel entweder in der Pumpenkammer als zusätzliches Teil aufweisen, alternativ kann eine Begrenzung bzw. eine Wandung der Pumpenkammer selbst direkt beheizt werden.

Eine solche Wärmepumpenvorrichtung weist den großen Vorteil auf, dass an sich die maximal mögliche Wärmegewinnung mittels der Wärmepumpenvorrichtung konstruktiv vorgegeben ist sowie durch die vorhandene Temperatur an der Wärmequelle sowie die gewünschte Temperatur für den Heizzweck vorgegeben ist. Reichen diese jedoch nicht aus, um die gewünschte Wärmegewinnung zu erreichen, so ist eine zusätzliche Beheizung notwendig. Diese kann einerseits in dem zu beheizenden Raum oder Gebäude vorgesehen sein, also völlig unabhängig von der Wärmepumpenvorrichtung, was jedoch den baulichen Aufwand vergrößert. Andererseits ist es auch möglich, im Kollektorkreislauf und/oder im Heizungskreislauf eine Beheizung vorzusehen, so dass die Beheizungsmittel des Heizungskreislaufs weiterhin ausreichen und auch nicht verändert werden müssen. Der Nachteil einer zusätzlich vorzusehenden Heizeinrichtung ist jedoch, dass die Wärmepumpenvorrichtung konstruktiv geändert werden muss und zusätzlich ein weiteres Bauteil mit weiteren elektrischen Anschlüssen eingebaut werden muss. Deswegen ist das erfindungsgemäße Vorsehen einer Pumpe mit direkt beheizbarer Pumpenkammer erheblich effizienter und energiesparender, weil zusätzlich keine konstruktiven Änderungen durchzuführen sind und kein weiteres Bauteil mit weiteren elektrischen Anschlüssen eingebaut werden muss.

Vorteilhaft wird die Pumpe mit beheizbarer Pumpenkammer, bei einem Vorsehen im Kollektorkreislauf, in Flußrichtung der Kollektorflüssigkeit vor dem Verdampfer angeordnet. So kann die Kollektorflüssigkeit auch nach Erwärmung durch die Wärmequelle noch weiter erhitzt werden.

Vorteilhaft ist diese Kollektorpumpe kurz vor dem Verdampfer angeordnet. Besonders vorteilhaft befinden sich keine weiteren funktionalen Baueinheiten zwischen der beheizbaren Pumpe und dem Verdampfer und insbesondere auch nur eine kurze Leitung, beispielsweise weniger als 1 m oder sogar weniger als 0,5 m.

Auch für den Heizungskreislauf gilt, dass hier eine als Heizungspumpe vorgesehene beheizbare Pumpe in Flußrichtung der Heizungsflüssigkeit nach dem Verflüssiger und somit vor den Beheizungsmitteln angeordnet sein sollte. So kann die Heizungsflüssigkeit, die über den Wärmetauscher im Kältemittelkreislauf bzw. im Verdampfer erwärmt worden ist, noch etwas mehr erhitzt werden für die gewünschte verstärkte Heizwirkung. Diese beheizte Pumpe kann kurz hinter dem Verflüssiger angeordnet sein, um den gesamten Anschlussaufwand geringer zu halten und Schwierigkeiten zu reduzieren, die durch eine Verlagerung näher zu den Beheizungsmitteln hin entstehen könnten. Auch hier kann vorgesehen sein, dass zwischen Verflüssiger und beheizter Pumpe keine vorgenannten funktionalen Baueinheiten vorgesehen sind und der Abstand entsprechend gering ist.

Vorteilhaft ist vorgesehen, dass die Pumpe mit beheizbarer Pumpenkammer ein Pumpengehäuse aufweist mit der Pumpenkammer darin. An oder in der Pumpenkammer sind Heizmittel vorgesehen, die beispielsweise, wie vorgenannt, zumindest teilweise eine Wandung der Pumpenkammer bilden können. Vorteilhaft ist dies eine weitgehend umlaufende Mantelwandung, so dass ein rohrförmiges oder zumindest teilrohrförmiges Heizmittel als Bauteil vorgesehen ist. Die Heizmittel bzw. ein Heizelement können aber auch planar bzw. eben oder plan sein.

Die Heizmittel selbst können vorteilhaft als Dickschichtheizelement ausgebildet sein. Sie können direkt auf die Wandung des die Pumpenkammer bildenden Trägers aufgebracht werden in einem üblichen Verfahren. Damit sind auch sehr hohe Leistungsdichten möglich.

In weiterer Ausgestaltung der Erfindung können die Heizmittel als oder mit einem Temperatursensor ausgebildet sein und dazu einen temperaturabhängigen elektrischen Widerstand aufweisen. Vorteilhaft ist dies ein negativer Temperaturkoeffizient, so dass es ein NTC-Temperatursensor ist.

Das Beheizen der Kollektorflüssigkeit und/oder der Heizungsflüssigkeit zeitgleich mit dem Pumpen und innerhalb der Pumpe weist den großen Vorteil auf, dass es energieeffizient ist und gleichzeitig sehr reaktionsschnell. Gleichzeitig können fertig integrierte Bauteile zum Pumpen und zum Heizen vorgesehen werden, was den Herstellungs- sowie vor allem den Montageaufwand reduziert.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in Zwischen-Überschriften und einzelne Abschnitte beschränkt die unter diesen gemachten Aussagen nicht in ihrer Allgemeingültigkeit.

### Kurzbeschreibung der Zeichnungen

- Fig. 1: eine schematische Darstellung einer erfindungsgemäßen Wärmepumpenvorrichtung mit Kollektorkreislauf, Kältemittelkreislauf und Heizungskreislauf und
- Fig. 2: eine schematische Schnittansicht einer Pumpe mit beheizbarer Pumpenkammer zur Förderung und Beheizung einer geförderten Flüssigkeit.

### Detaillierte Beschreibung der Ausführungsbeispiele

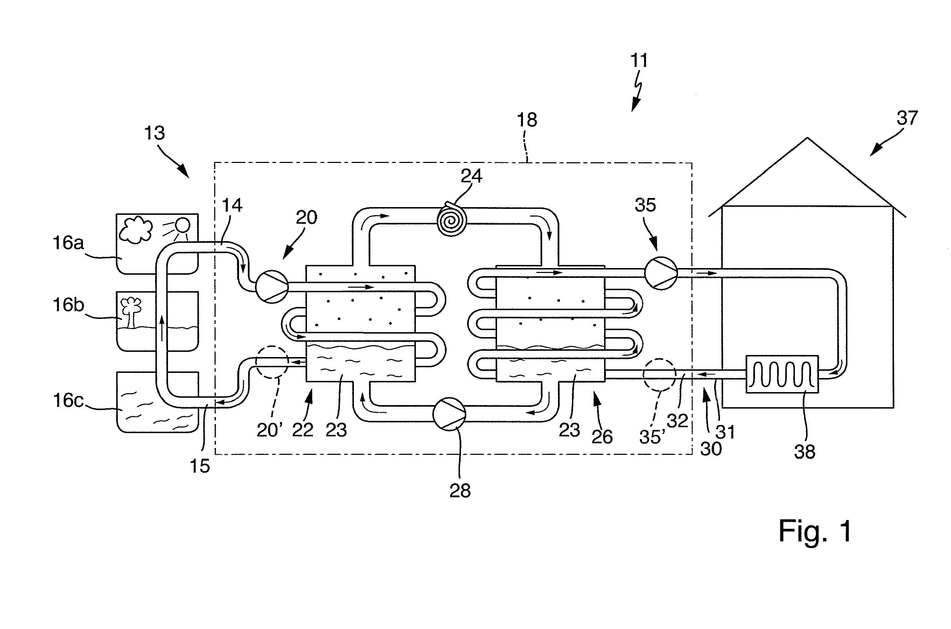

In der Fig. 1 ist eine erfindungsgemäße Wärmepumpenvorrichtung 11 für Heizzwecke dargestellt. Sie weist einen Kollektorkreislauf 13 mit einer Kollektorleitung 14 auf, die im linken Bereich durch eine von mehreren Wärmequellen führt, nämlich Luft 16a, Erde 16b oder Wasser 16c. Diese Kollektorleitung 14 führt in eine strichpunktiert umrandete Wärmepumpe 18, die sozusagen eine funktionale Einheit sein soll, dabei aber nicht zwingend eine einzige Baueinheit ist, wobei dies vorteilhaft sein kann bzw. vorteilhaft kann sie in einem Gehäuse angeordnet sein.

In der Kollektorleitung 14 zirkuliert eine Kollektorflüssigkeit 15. Diese Zirkulation wird im Wesentlichen erzeugt von einer Pumpe 20, welche entweder eine ganz normale Pumpe sein kann oder aber, vorteilhaft, eine zuvor genannte beheizte Pumpe. Hinter der Pumpe 20 führt die Kollektorleitung 14 zu einem Verdampfer 22, und zwar derart, dass die Kollektorflüssigkeit 15 ihre der Wärmequelle 16 entnommene Wärme an ein Kältemittel 23 im Verdampfer 22 abgeben kann. Durch diese genannte Wärme wird das Kältemittel 23 verdampft und strömt durch einen Kompressor 24 verdichtet in einen Verflüssiger 26, in dem es dann wieder verflüssigt wird. Dann strömt es weiter durch ein Entspannungsventil 28 zurück in den Verdampfer 22.

Am Verflüssiger 26 wird die Wärme vom Kältemittel 23 an einen Heizungskreislauf 30 abgegeben, und zwar an eine Heizungsflüssigkeit 32, die in einer Heizungsleitung 31 zirkuliert. Zur Zirkulation ist kurz nach dem Verflüssiger 26 eine weitere Pumpe 35 als Heizungspumpe vorgesehen. Auch diese Pumpe 35 kann, ähnlich wie zuvor für die Kollektorpumpe 20 beschrieben, eine normale Pumpe sein oder, vorteilhaft, eine Pumpe mit beheizbarer Pumpenkammer. Dann führt die Heizungsleitung 31 in ein Haus 37 mit einem schematisch dargestellten Heizkörper 38, der dann auf bekannte Art und Weise die Wärme der Heizungsflüssigkeit 32 an die Umgebung in dem Haus 37 abgibt. Die dadurch etwas abgekühlte Heizungsflüssigkeit fließt in der Heizungsleitung 31 dann wieder zurück zu der Wärmepumpe 18 bzw. zu dem Verflüssiger 26.

Für die jeweiligen Temperaturen kann bei einem Ausführungsbeispiel gelten, dass die Temperatur an der Wärmequelle beispielsweise in der Erde als Wärmequelle 16b zwischen -1°C und + 2°C schwankt. Die Kollektorflüssigkeit 15 weist also im Wesentlichen diese Temperatur auf und erwärmt damit am Verdampfer 22 das Kältemittel 23, das dort eine Temperatur von etwa -4°C aufweisen kann. Vor dem Kompressor 24 kann das Kältemittel 23 einen Druck von etwa 5 bis 6 bar aufweisen und eine Temperatur von etwa 0°C. Hinter dem Kompressor kann der Druck etwa 17 bar betragen und die Temperatur etwa 36°C. Im Verflüssiger 26 beträgt die Temperatur des Kältemittels 23 dann noch etwa 32°C, welche sich dann bis kurz vor das Entspannungsventil 28 auf etwa 25°C absenkt. Der Druck bleibt bei etwa 17 bar. Direkt hinter dem Entspannungsventil 28 beträgt der Druck dann die auch oben genannten am Kompressor 24 anliegenden 5 bis 6 bar bei einer Temperatur von -4°C.

Die Heizungsflüssigkeit 31 wird am Verflüssiger 26 von dem Kältemittel 23 auf etwa 35°C aufgewärmt und strömt mit dieser Temperatur in den Heizkörper 38 im Haus 37. Mit einer Temperatur von etwa 27°C strömt die Heizungsflüssigkeit 32 dann wieder zurück zur Wärmepumpe 18 bzw. zum Verflüssiger 26.

Durch die Ausbildung von einer oder beider Pumpen 20 bzw. 35 als beheizte Pumpe kann deren Heizleistung letztlich auch in die Heizungsflüssigkeit 32 und somit den Heizkörper 38 übertragen werden. Wird die Heizungspumpe 35 beheizt, so erfolgt dies direkt und auf den ersten Blick ersichtlich. Wird die Kollektorpumpe 20 beheizt, so kann diese höhere bzw. optimale Temperatur im Vergleich zu einer nicht beheizten Pumpe auch entsprechend in das Kältemittel 23 übertragen werden, welches dann eben wiederum im Verflüssiger 26 ebenfalls wärmer ist und somit die Effizienz steigert, damit auch die Heizungsflüssigkeit 32 stärker erwärmt werden kann. Deswegen ist es auch sinnvoll, eine beheizte Kollektorpumpe 20 kurz vor dem Verdampfer 22 einzubauen, obwohl auch eine gestrichelt dargestellte Kollektorpumpe 20' kurz hinter dem Verdampfer 22 wie nach dem Stand der Technik vorgesehen sein könnte, um bauliche Veränderungen der Wärmepumpe bei der Integration der Heizungspumpe gering zu halten. Die Position 20' ist allerdings nicht optimal, da die Heizleistung dann im Wesentlichen auch an die Wärmequelle 16a bis 16c abgegeben werden würde. In ähnlicher Form könnte auch eine Heizungspumpe 35 kurz vor dem Verflüssiger 26 in der gestrichelt dargestellten Position 35' vorgesehen werden. Allerdings würde dann auch hier die durch die Beheizung der Pumpenkammer erzeugte Wärme nicht optimal genutzt werden.

Eine solche Verwendung von beheizten Pumpen als Kollektorpumpe 20 und/oder Heizungspumpe 35 bietet sich vor allem an, um Spitzen im Verbrauch bzw. bei der Heizung versorgen zu können. Des Weiteren kann auch, falls durch einen höheren Anteil von Windstrom oder Sonnenstrom im Versorgungsnetz oder lokal ein Übermaß an derzeit nicht benötigtem Strom vorhanden ist, dieser in mehr Wärme für Heizungszwecke umgesetzt werden für eine etwas stärkere Beheizung, beispielsweise des Hauses 37. Geht dann die Stromproduktion wieder zurück, so kann die Heizleistung etwas unter den Durchschnitt gefahren werden, so dass sich insgesamt im Mittel eine gewünschte Beheizung ergibt. Ansonsten für einen derartigen Zweck vorgesehene zusätzliche elektrische Heizungen oder Heizpatronen, beispielsweise im Heizungskreislauf 30 oder einem Warmwasserspeicher, können dann entfallen, ebenso deren zusätzlicher Installations- und Anschlussaufwand. Darüber hinaus ist eine Integration einer Beheizung in die Pumpe und somit auch in den sich bewegenden Strom der Flüssigkeit sehr viel effizienter. Pumpe und Beheizung können dabei optimal aufeinander abgestimmt sein, so dass auch keine Probleme mit Systemunverträglichkeiten zu befürchten ist.

Ein weiterer Systemvorteil einer beheizten Pumpe liegt darin, dass in dem Fall, dass die Heizmittel der Pumpe als oder mit Temperatursensor ausgebildet sind bzw. verwendet werden, wie eingangs erläutert worden ist, auch eine Temperaturüberwachung sehr gut durchgeführt werden kann.

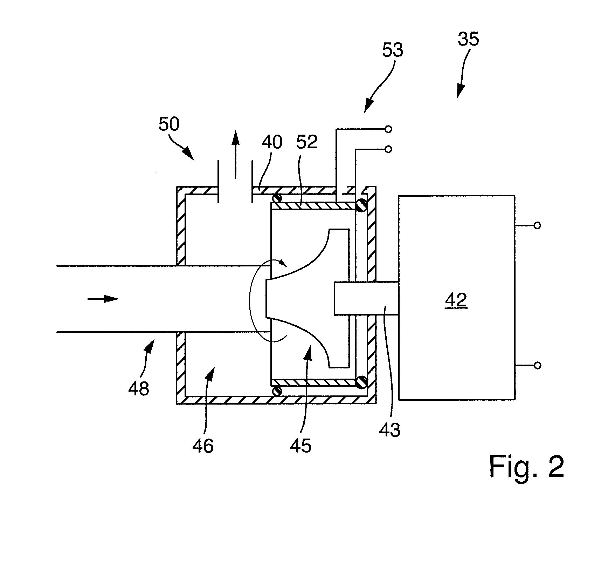

In der Fig. 2 ist schematisch eine derartige beheizte Pumpe als Heizungspumpe 35 dargestellt. Sie weist ein Pumpengehäuse 40 auf und einen Pumpenmotor 42, der an einer Motorwelle 43 einen Impeller 45 trägt und dreht. Das Pumpengehäuse 40 weist des Weiteren eine Pumpenkammer 46 auf mit Zulauf 48 und Ablauf 50. In der Pumpenkammer 46 umgibt ein ringförmig ausgebildetes Heizmittel 52 mit elektrischen Anschlüssen 53 den Impeller 45. Das Heizmittel 52 kann beispielsweise ein metallischer Ring sein und auf seiner Außenseite, also abgedichtet gegen die Flüssigkeit in der Pumpenkammer 46, aufgebrachte Dickschichtheizelemente aufweisen. Somit bildet hier das Heizmittel 52 einen Teil der Pumpenkammer 46 bzw. einen Teil ihrer Wandung. Das Heizmittel 52 könnte aber auch einen Großteil der Pumpenkammerwandung bilden, alternativ könnte es auch allseitig umströmt in der Pumpenkammer angeordnet sein, beispielsweise als runder Rohrheizkörper mit mehreren Windungen oder Schleifen. Ebenfalls ist denkbar, dass ein ebenes Heizelement in die Pumpenkammer integriert werden kann und so die Pumpe beheizt wird. Generell ist jede Art der Beheizung für die Pumpe denkbar, auch von bewegten Teilen daran oder darin.

## Patentansprüche

1. Wärmepumpenvorrichtung für Heizzwecke, mit:
- einem Kollektorkreislauf für eine Wärmequelle mit einer Kollektorpumpe für eine Kollektorflüssigkeit,
- einem Kältemittelkreislauf mit einem Verdampfer und mit einem Verflüssiger für ein Kältemittel in dem Kältemittelkreislauf sowie mit einem Kompressor und einem Entspannungsventil,
- einem Heizungskreislauf mit einer Heizungspumpe für eine Heizungsflüssigkeit mit Beheizungsmitteln für den Heizzweck,
wobei der Kollektorkreislauf mit dem Verdampfer des Kältemittelkreislaufs zusammenwirkt zur Wärmeabgabe an das Kältemittel, wobei der Verflüssiger des Kältemittelkreislaufs mit dem Heizungskreislauf zusammenwirkt zur Wärmeabgabe vom Kältemittel, **dadurch gekennzeichnet, dass** mindestens die Kollektorpumpe und/oder die Heizungspumpe als Pumpe mit beheizbarer Pumpenkammer zur Erhitzung der von der Pumpe geförderten Flüssigkeit ausgebildet ist.

2. Wärmepumpenvorrichtung nach Anspruch 1, **dadurch gekennzeichnet, dass** die Kollektorpumpe mit beheizbarer Pumpenkammer im Kollektorkreislauf in Flußrichtung der Kollektorflüssigkeit vor dem Verdampfer angeordnet ist, vorzugsweise kurz vor dem Verdampfer und insbesondere ohne weitere funktionale Baueinheiten dazwischen.

3. Wärmepumpenvorrichtung nach Anspruch 1 oder 2, **dadurch gekennzeichnet, dass** die Heizungspumpe mit beheizbarer Pumpenkammer im Heizungskreislauf in Flußrichtung der Heizungsflüssigkeit nach dem Verflüssiger angeordnet ist, vorzugsweise kurz nach dem Verflüssiger und insbesondere ohne weitere funktionale Baueinheiten dazwischen.

4. Wärmepumpenvorrichtung nach einem der vorhergehenden Ansprüche, **dadurch gekennzeichnet, dass** die Pumpe mit beheizbarer Pumpenkammer ein Pumpengehäuse mit der Pumpenkammer darin aufweist, wobei an oder in der Pumpenkammer Heizmittel vorgesehen sind.

5. Wärmepumpenvorrichtung nach Anspruch 4, **dadurch gekennzeichnet, dass** die Heizmittel zumindest teilweise eine Wandung der Pumpenkammer bilden, vorzugsweise eine umlaufende Mantelwandung.

6. Wärmepumpenvorrichtung nach Anspruch 4 oder 5, **dadurch gekennzeichnet, dass** die Heizmittel als Dickschichtheizelement ausgebildet sind.

7. Wärmepumpenvorrichtung nach einem der Ansprüche 4 bis 6, **dadurch gekennzeichnet, dass** die Heizmittel als Temperatursensor oder mit Temperatursensor ausgebildet sind mit einen temperaturabhängigen elektrischen Widerstand, vorzugsweise mit einem negativen Temperaturkoeffizienten des Widerstands.

8. Verwendung einer Pumpe mit beheizbarer Pumpenkammer in einer Wärmepumpenvorrichtung für Heizzwecke, insbesondere in einer Wärmepumpenvorrichtung nach einem der vorhergehenden Ansprüche, mit:
- einem Kollektorkreislauf für eine Wärmequelle mit einer Kollektorpumpe für eine Kollektorflüssigkeit,
- einem Kältemittelkreislauf mit einem Verdampfer und mit einem Verflüssiger für ein Kältemittel in dem Kältemittelkreislauf sowie mit einem Kompressor und einem Entspannungsventil,
- einem Heizungskreislauf mit einer Heizungspumpe für eine Heizungsflüssigkeit mit Beheizungsmitteln für den Heizzweck,
wobei der Kollektorkreislauf mit dem Verdampfer des Kältemittelkreislaufs zusammenwirkt zur Wärmeabgabe an das Kältemittel, wobei der Verflüssiger des Kältemittelkreislaufs mit dem Heizungskreislauf zusammenwirkt zur Wärmeabgabe vom Kältemittel, **dadurch gekennzeichnet, dass** mindestens die Kollektorpumpe und/oder die Heizungspumpe als die Pumpe mit beheizbarer Pumpenkammer zur Erhitzung der von der Pumpe geförderten Flüssigkeit ausgebildet ist.

9. Verfahren zum Betrieb einer Wärmepumpenvorrichtung für Heizzwecke mit mindestens einer Pumpe mit beheizbarer Pumpenkammer, insbesondere zum Betrieb einer Wärmepumpenvorrichtung nach einem der Ansprüche 1 bis 7, **dadurch gekennzeichnet, dass** von einer Wärmequelle wie Luft, Wasser oder Boden mittels einer Kollektorflüssigkeit Wärme aufgenommen wird und diese Kollektorflüssigkeit in einem Kollektorkreislauf gepumpt wird, wobei sie ihre Wärme in einem Wärmetauscher an ein Kältemittel abgibt, wobei vorzugsweise hier das Kältemittel in einem Verdampfer verdampft wird, wobei anschließend das Kältemittel komprimiert und dabei erwärmt wird und danach in einem Verflüssiger als Wärmetauscher die Wärme an eine Heizungsflüssigkeit eines Heizungskreislaufs zu Heizzwecken abgibt, wobei dann das Kältemittel wieder verdampft wird und in den Verdampfer geführt wird und wobei die Heizungsflüssigkeit in dem Heizungskreislauf gepumpt wird, **dadurch gekennzeichnet, dass** die Kollektorflüssigkeit im Kollektorkreislauf und/oder die Heizungsflüssigkeit im Heizungskreislauf während des Pumpens gleichzeitig und in der Pumpe erwärmt wird.

10. Verfahren nach Anspruch 9, **dadurch gekennzeichnet, dass** die Pumpe mit beheizbarer Pumpenkammer nur dann heizt bzw. nur dann deren Heizmittel betrieben werden, wenn für die Heizzwecke mehr Wärme benötigt wird als von der Wärmepumpenvorrichtung erzeugt, wobei vorzugsweise zuerst die Heizmittel der Heizungspumpe betrieben werden und dann die Heizmittel der Kollektorpumpe.
